# EUROPÄISCHE PATENTANMELDUNG

(11) **EP 2 631 502 A1**
(43) Veröffentlichungstag der Anmeldung: **28.08.2013**
(21) Anmeldenummer: 13155932.0
(22) Anmeldetag: 20.02.2013
(51) Int. Cl.: F16C 33/78, F16J 15/16, F16J 15/32

(54) **Lagervorrichtung**

(30) Priorität: 22.02.2012 DE 102012202700
(71) Anmelder: Aktiebolaget SKF, 41550 Göteborg (SE)
(72) Erfinder: Kogler, Christian, 8761 Oberkurzheim (AT); Swete, Wolfgang, 8720 Knittelfeld (AT); Tanke, Jesko-Henning, 97422 Schweinfurt (DE)
(74) Vertreter: Schonecke, Mitja

(57) **Zusammenfassung**

Die Erfindung geht aus von einer Lagervorrichtung, insbesondere Wälzlagervorrichtung, mit wenigstens einer Dichtungseinheit (30), welche eine erste Dichtlippe (32) und eine zweite Dichtlippe (34) aufweist, wobei die zweite Dichtlippe (34) zwischen einem Innenraumbereich (36) der Lagervorrichtung und der ersten Dichtlippe (32) angeordnet ist.

Es wird vorgeschlagen, die Lagervorrichtung einen Leitungskanal (38) aufweist, welcher von dem Innenraumbereich (36) zu der ersten Dichtlippe (32) führt.

## Beschreibung

Die Erfindung geht aus von einer Lagervorrichtung nach dem Oberbegriff des Anspruchs 1.

Es ist eine Lagervorrichtung mit einer Dichtungseinheit bekannt, welche eine erste und eine zweite Dichtlippe aufweist. Die zweite Dichtlippe ist zwischen einem Innenraumbereich der Lagervorrichtung und der ersten Dichtlippe angeordnet.

Die Aufgabe der Erfindung besteht insbesondere darin, eine gattungsgemäße Lagervorrichtung mit einer effizienten Abdichtung bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einer Lagervorrichtung, insbesondere Wälzlagervorrichtung, mit wenigstens einer Dichtungseinheit, welche eine erste und eine zweite Dichtlippe aufweist. Die zweite Dichtlippe ist zwischen einem Innenraumbereich der Lagervorrichtung und der ersten Dichtlippe (32) angeordnet.

Es wird vorgeschlagen, dass die Lagervorrichtung einen Leitungskanal aufweist, welcher von dem Innenraumbereich zu der ersten Dichtlippe führt.

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.
Fig. 1 zeigt einen Schnitt durch einen Teil einer erfindungsgemäßen Lagervorrichtung, und
Fig. 2 zeigt einen Schnitt durch eine alternative Ausführung eines Teils der Lagervorrichtung.

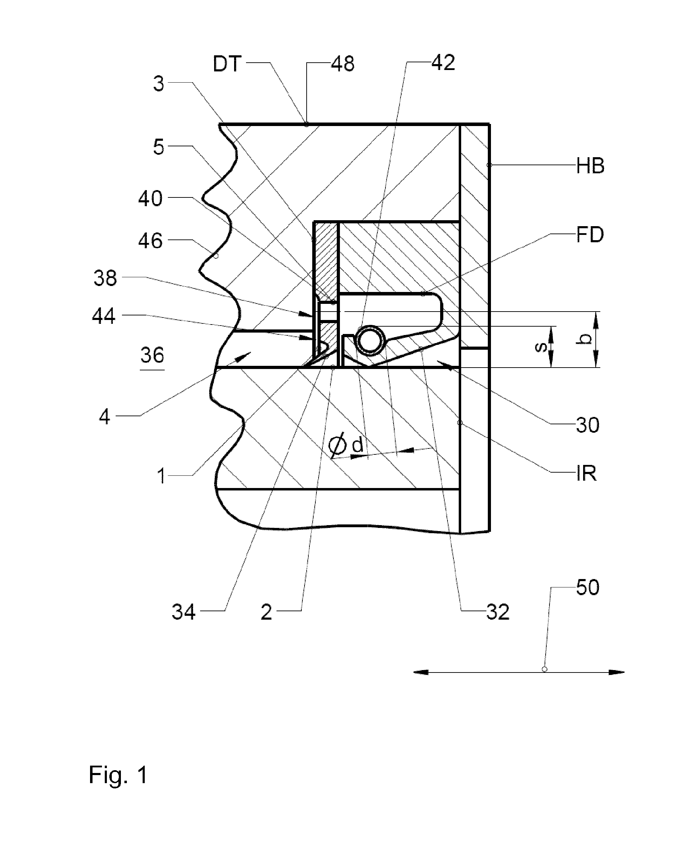

Figur 1 zeigt eine fettgeschmierte, als Wälzlagervorrichtung ausgebildete Lagervorrichtung, welche eine Dichtungseinheit 30 mit einer ersten und eine zweiten Dichtlippe 32, 34 aufweist. Ein Dichtelement 1 der Dichtungseinheit 30 weist die zweite Dichtlippe 34 auf und ein Dichtelement FD der Dichtungseinheit 30 weist die erste Dichtlippe 32 auf. Ferner weist die Wälzlagervorrichtung einen Innenring IR und einen Außenring (nicht gezeigt) auf, welche relativ zueinander derart gelagert sind, dass bei einem Betrieb der Wälzlagervorrichtung der Innenring IR sich relativ zu dem Außenring um eine Achse (nicht dargestellt) dreht. Außerdem umfasst die Wälzlagervorrichtung einen Innenraumbereich 36, welcher zwischen dem Innenring IR und dem Außenring angeordnet ist. Die zweite Dichtlippe 34 ist zwischen dem Innenraumbereich 36 und der ersten Dichtlippe 32 angeordnet. Die Dichtlippen 32,34 liegen in einem Betriebszustand an einer Anlagefläche 2 des Innenrings IR an. In dem Innenraumbereich 36 weist die Lagervorrichtung Fett zur Schmierung auf.

Des weiteren weist die Lagervorrichtung ein Trägerelement DT auf, welches an dem Außenring befestigt ist. Die Dichtungseinheit 30 ist an den Trägerelement DT befestigt. Ferner weist die Lagervorrichtung einen Zwischenraum 44 auf, welcher in Bezug auf die axiale Richtung der Lagervorrichtung zwischen einem Bereich 46 des Trägerelements DT und des Dichtelements 1 angeordnet ist. Der Bereich 46 ragt ausgehend von einem Grundkörper 48 des Trägerelements DT in Radialrichtung der Lagervorrichtung nach innen. Ferner ist der Bereich 46 einstückig mit dem Grundkörper 48 ausgebildet.

Ein Leitungskanal 38 der Lagervorrichtung führt von dem Innenraumbereich 36 zu der ersten Dichtlippe 32. Ein Teil des Leitungskanals 38 ist von einer Durchgangsöffnung 40 des Dichtelements 1 gebildet. Ein weiterer Teil des Leitungskanals 38 ist von dem Zwischenraum 44 gebildet.

Außerdem weist die Lagervorrichtung ein als Spiralefelder ausgebildetes Federelemente 42 auf, welche die Achse umgibt und die Dichtlippe 32 entlang eines gesamten Umfangs des Innenrings IR gegen den Innenring IR drückt. Die Durchgangsöffnung 5 ist eine Bohrung in axialer Richtung 50 der Lagevorrichtung. Die Mittelachse der Bohrung weist in Bezug auf die Radialrichtung der Lagervorrichtung einen Abstand b von dem Innenring IR auf. Ferner weist ein in Bezug auf Radialrichtung der Lagervorrichtung außen liegender Bereich des Federelements 42 einen Abstand s von dem Innenring IR auf. Es gilt b>s. Die Spiralfeder weist einen Durchmesser d auf. Es gilt b>(s-d).

Die zweite Dichtlippe 34 ist in Bezug auf die Radialrichtung der Lagervorrichtung teilweise zwischen dem Bereich 46 und dem Innenring IR angeordnet.

Die Dichtungseinheit 30 ist ein Radialwellendichtring und kann leicht ausgewechselt werden. Die Lagervorrichtung weist ein Halteblech HB auf. Die Dichtungseinheit 30 ist von dem Halteblech HB gegenüber dem Trägerelement DT verpresst und dadurch fixiert. Das Dichtelement 1 ist eine Vorschaltdichtung und an eine Anlagefläche 3 des Trägerelements verpresst. Das Dichtelement 1 ist aus einem flexiblen Werkstoff, vorzugsweise aus einem Elastomer oder Polyurethan, alternativ aus Silikon. Eine Haupterstreckungsrichtung der Dichtlippe 32 verläuft schräg zu der axialen Richtung 50.

Die Dichtlippe 34 stellt keine absolute Dichtheit gegenüber Fett aus dem Innenraumbereich 36 her sondern reduziert dessen Druck. Eine negative Auswirkung von Verschleiß der Dichtlippe 34 ist deshalb gering. Durch den Leitungskanal 38 kann Luft und/oder Fett aus dem Innenraumbereich 36 zwischen das Dichtelement 1 und das Dichtelement FD, das als Fettdichtung ausgebildet ist, gelangen, wodurch verhindert wird, dass das Dichtelement 1 gegen die Dichtlippe 32 gedrückt wird, so dass Fett, das durch den Leitungskanal geflossen ist, in den Innenraumbereich 36 zurückströmen kann. Durch die Relationen b>s und b>(s-d) wird verhindert, dass Fett, das durch den Leitungskanal geflossen ist, die Dichtlippe 32 von dem Innenring IR abhebt. Insgesamt wird somit durch den Aufbau der Dichtungseinheit 30 und insbesondere durch den Leitungskanal erreicht, dass der Druck des aus dem Innenraumbereichs 36 strömenden Fettes nicht die Dichtlippe 32 von dem Innenring IR abhebt und durch den Leitungskanal strömendes Fett in Radialrichtung der Lagevorrichtung nach innen auf die Dichtlippe 32 drückt und so die Dichtwirkung unterstützt.

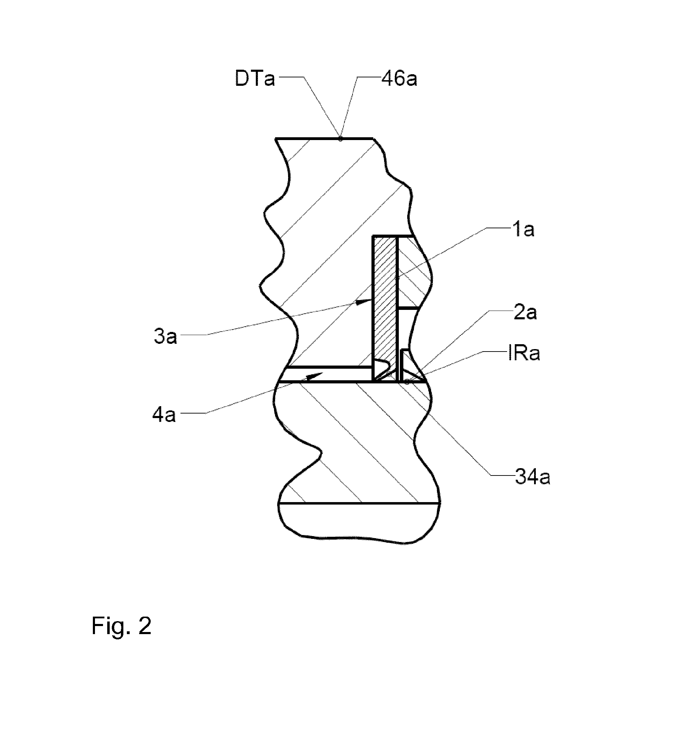

In Figur 2 ist ein alternatives Ausführungsbeispiel dargestellt. Im Wesentlichen gleich bleibende Bauteile, Merkmale und Funktionen sind grundsätzlich mit den gleichen Bezugszeichen beziffert. Zur Unterscheidung der Ausführungsbeispiele sind jedoch den Bezugszeichen der Ausführungsbeispiele in Fig. 2 der Buchstabe die Buchstabe "a" hinzugefügt. Die nachfolgende Beschreibung beschränkt sich im Wesentlichen auf die Unterschiede zu dem Ausführungsbeispiel in Fig. 1, wobei bezüglich gleich bleibender Bauteile, Merkmale und Funktionen auf die Beschreibung des Ausführungsbeispiels in Fig. 1 verwiesen werden kann.

Figur 2 zeigt eine alternative Ausbildung eines Dichtelements 1a und eines Bereichs 46a. Der Bereich besitzt im Vergleich zu dem Bereich 46 in Figur 1 einen geringeren Abstand von einem Innenring IRa. Ein Raumbereich 4a, der in Bezug auf eine radiale Richtung der Lagervorrichtung zwischen dem radial nach innen ragenden Bereich 46a eines Trägerelements DTa und dem Innenring IRa angeordnet ist, ist frei von einer Dichtlippe 34a. Zusätzlich kann wie in Figur 1 gezeigt der Leitungskanal 38 vorhanden sein. Die in Figur 2 gezeigte Ausführung kann in bereits vorhandene Bauräume eingebracht werden.

### Bezugszeichenliste

| | |
|---|---|
| 1 | Dichtelement |
| 2 | Anlagefläche |
| 3 | Anlagefläche |
| 4 | Raumbereich |
| 5 | Durchgangsöffnung |
| DT | Trägerelement |
| HB | Halteblech |
| FD | Dichtelement |
| IR | Innenring |
| b | Abstand |
| s | Abstand |
| d | Durchmesser |
| 30 | Dichtungseinheit |
| 32 | Dichtlippe |
| 34 | Dichtlippe |
| 36 | Innenraumbereich |
| 38 | Leitungskanal |
| 40 | Durchgangsöffnung |
| 42 | Federelement |
| 44 | Zwischenraum |
| 46 | Bereich |
| 48 | Grundkörper |
| 50 | Richtung |

## Patentansprüche

1. Lagervorrichtung, insbesondere Wälzlagervorrichtung, mit wenigstens einer Dichtungseinheit (30), welche eine erste Dichtlippe (32) und eine zweite Dichtlippe (34) aufweist, wobei die zweite Dichtlippe (34) zwischen einem Innenraumbereich (36) der Lagervorrichtung und der ersten Dichtlippe (32) angeordnet ist,
**dadurch gekennzeichnet, dass**
die Lagervorrichtung einen Leitungskanal (38) aufweist, welcher von dem Innenraumbereich (36) zu der ersten Dichtlippe (32) führt.

2. Lagervorrichtung nach Anspruch 1, wobei die Dichtungseinheit (30) eine Durchgangsöffnung (40) aufweist, welche zumindest einen Teil des Leitungskanals (38) bildet.

3. Lagervorrichtung nach Anspruch 2, wobei die Lagervorrichtung eine Wälzlagervorrichtung mit wenigstens einem Innenring (IR) und wenigstens einem Außenring ist und wobei der Innenring (IR) relativ zu dem Außenring derart gelagert ist, dass sich bei wenigstens einem Betriebsvorgang der Innenring (IR) relativ zu dem Außenring um eine Achse dreht, und wobei die Durchgangsöffnung (40) wenigstens einen Bereich aufweist, der von der Achse einen größeren Abstand hat als ein Federelement (42) der Lagervorrichtung, welches die erste Dichtlippe (32) in Richtung der Achse drückt.

4. Lagervorrichtung nach einem der Ansprüche 1 bis 3, wobei die Lagervorrichtung wenigstens ein Trägerelement (DT) aufweist, welches in wenigstens einem Betriebszustand zumindest einen Teil der Gewichtskraft der Dichtungseinheit (30) aufnimmt, und wobei die Lagervorrichtung einen Zwischenraum (44) zwischen dem Trägerelement (DT) und der Dichtungseinheit (30) aufweist, welcher zumindest einen Teil des Leitungskanals (38) bildet.

5. Lagervorrichtung nach einem der vorherigen Ansprüche, wobei die beiden Dichtlippen (32, 34) in wenigstens einem Betriebszustand an demselben Bauteil (IR) der Lagervorrichtung anliegen.

6. Lagervorrichtung nach Anspruch 5, wobei das Bauteil als Innenring (IR) der als Wälzlagervorrichtung ausgebildeten Lagervorrichtung ausgebildet ist.

7. Lagervorrichtung nach einem der vorherigen Ansprüche, wobei die Lagervorrichtung ein Trägerelement (DT) aufweist, welches in wenigstens einem Betriebszustand zumindest einen Teil der Gewichtskraft der Dichtungseinheit (30) aufnimmt, und wobei die Lagervorrichtung als Wälzlagervorrichtung ausgebildet ist und einen Innenring (IR) aufweist, wobei die zweite Dichtlippe (34) in Bezug auf eine radiale Richtung der Lagervorrichtung wenigstens teilweise zwischen einem radial nach innen ragenden Bereich (46) des Trägerelements (DT) und dem Innenring (IR) angeordnet ist.

8. Lagervorrichtung nach einem der vorherigen Ansprüche, wobei die Lagervorrichtung ein Trägerelement (DTa)aufweist, welches in wenigstens einem Betriebszustand zumindest einen Teil der Gewichtskraft der Dichtungseinheit (30a) aufnimmt, und wobei die Lagervorrichtung als Wälzlagervorrichtung ausgebildet ist und einen Innenring (IRa)aufweist, wobei ein Raumbereich (4a), der in Bezug auf eine radiale Richtung der Lagervorrichtung zwischen einem radial nach innen ragenden Bereich (46a) des Trägerelements (DTa) und dem Innenring (IRa) angeordnet ist, frei von der zweiten Dichtlippe (34a) ist.
